# EUROPEAN PATENT APPLICATION

(11) **EP 0 974 634 A1**
(43) Date of publication of application: **26.01.2000**
(21) Application number: 99305503.7
(22) Date of filing: 12.07.1999
(51) Int. Cl.: C09K 17/06, C09K 17/04

(54) **Ground improvement process and structure**

(30) Priority: 14.07.1998 GB 9815292; 18.05.1999 GB 9911384
(71) Applicant: BICC Public Limited Company, London W1X 5FH (GB)
(72) Inventor: Schofield, Thomas Adam, Ashurt, Southampton, Hampshire S040 7DW (GB); Troughton, Vivien Michael, Hillingdon, Middlesex UB10 9AB (GB)
(74) Representative: Poole, Michael John

(57) **Abstract**

A process for the improvement of organic soils and soils of substantial clay content comprises *in situ* mixing of lime and optionally at least one other stabilising additive into selected linear zones of the soil. The linear zones are of uniform, preferably rectangular, cross-section and will usually be straight but may sometimes be curved, e.g., to follow the route of a road, and are preferably uniformly spaced apart. Suitable stabilising secondary additives include hydraulic cements, furnace slag and pulverised fly ash (pfa).

## Description

This invention relates to a process for the improvement of the ground (soil) for stabilisation and/or for increasing its effective strength and in some cases its drainage and to the structure which results from the use of the process. It is applicable to organic soils (such as peat) and to soils with a substantial clay content.

Such soils may be mechanically weak, especially when waterlogged; they may be unstable in over-steep cuttings and may settle undesirably under load of buildings or civil engineering works. Such weaknesses are generally overcome, or at least limited, at present by the insertion of vertical or superficial drains, of lime columns, stone columns or piles, by the use of sheet piling or the injection of cementitious grouts. Sometimes lime columns have been formed in overlapping positions to form a continuous mixed body of irregular shape.

The present invention provides an alternative process that is more economic in some circumstances, usually where the required loading is relatively small and well distributed.

The process in accordance with the invention comprises *in situ* mixing of lime and optionally at least one other stabilising additive into selected linear zones of the soil.

By a "linear" zone is meant a zone of the soil that has a length much larger than its width or depth and a substantially uniform cross-section; the cross-section is preferably substantially rectangular and the linear zones will usually be straight, but may be curved if appropriate to the area to be treated.

In most cases we prefer that the linear zones are parallel to each other, or more generally uniformly spaced apart.

The optimum direction for the linear zones will depend on the nature of the application: for instance, for strengthening the foundations of a road or railway (railroad) they preferably run longitudinally of the route, while for slope stabilisation they preferably run up and down the slope.

While there are no particular limitations on the dimensions of the linear zones, we contemplate that in most cases the zones will have a depth of from about 1 to about 3 metres, a width of less than a metre, and a length of many metres, and that adjacent linear zones will usually be a few metres apart.

The lime, and any other stabilising additive, is preferably added in dry form, but wet additives may be suitable for some soils of low water content. Suitable additional stabilising additives include hydraulic cements, furnace slag, pulverised fly ash (pfa) and mixtures of these. Proportions of additives may be similar to those used in comparable stabilisation with columns in the same soil, e.g. a lime/cement addition of 30-180 kg/m³ would typically be used.

Preferably the lime (and any other stabilising additive) is mixed with the soil by plant that advances steadily along the length of the linear zone being formed.

Plant for the required *in situ* mixing of the additive may be commercially available, but if not can easily made by modification of dedicated trenching machines (as distinct from mechanical shovels which may form trenches by removing one bucket of soil at a time). We prefer to modify dedicated trenching machines of the kind having a chain fitted with excavating teeth. Especially for use with dry additives, we prefer to reverse the direction of the toothed chain (or invert the teeth) so as to carry additive downwards, and to modify the digging teeth (in various possible ways) to promote mixing. It will be apparent that it will also be necessary to add facilities for the introduction of the additive in controlled proportion to the soil being processed. Proprietary powder batching and blowing plant is available for use with dry additives, and conventional slurry batching and pumping equipment can be used for wet ones if desired. It is usually desirable to discharge the additive(s) at several points in the vicinity of the underground portion of the mixing chain.

In addition to the applications already mentioned, the invention may be used to strengthen the soil beneath raft foundations and to support temporary works in civil engineering, for example excavations for cut-and-cover tunnelling.

The combination of soil and additive will normally have a permeability greater than that of the unimproved soil, and so the linear zones are preferably aligned so that they contribute also to drainage of the treated area.

The invention will be further described, by way of example, with reference to the accompanying drawings in which:
Figure 1 is a diagram showing one form of the process of the invention in progress;
Figure 2 is a sketch illustrating one suitable modification to a trenching machine for use in the process of Figure 1;
   and each of
Figures 3-6 show one of the applications of the invention.

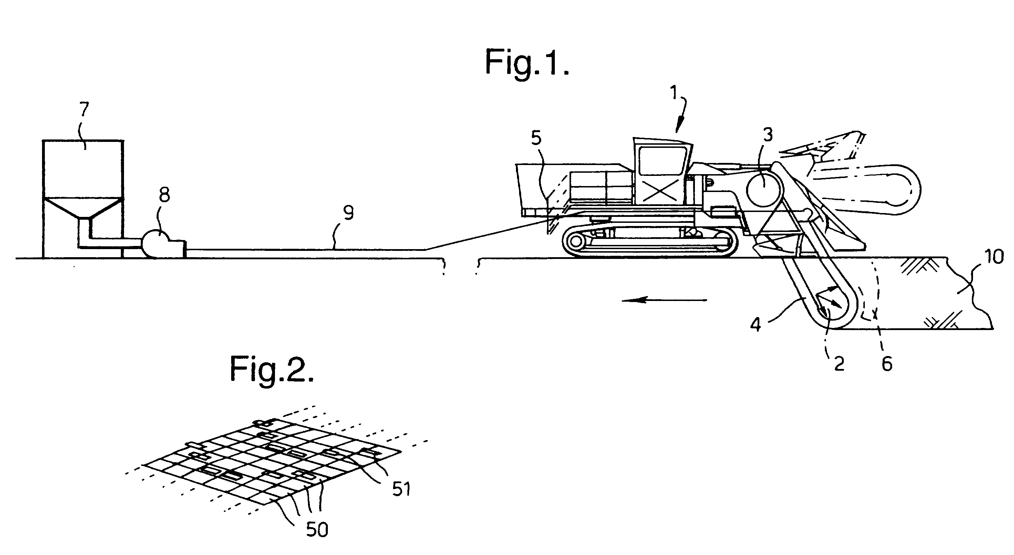

The form of the invention shown in Figure 1 uses a modified proprietary dedicated trenching machine 1 sold under the trademark "MASTENBROEK" as the "Mastenbroek 20/18 Highway trencher". This machine provides a boom 2, adjustable about an axis 3 to adjust the depth of working, carrying a bucket chain 4. In its primary use for forming trenches, the bucket chain is driven in such direction that it moved upward at the side nearer the front 5 of the machine and the buckets are designed to cut and lift soil as the machine advances and to discharge it either to a chute on the right-hand (far) side of the machine or via a belt to a dump truck or the like driven ahead of the machine. For the present application, these accessories are both removed and the direction of the toothed chain reversed so that it carries soil downwards at the front of the machine and discharges it to the rear on its upward passage.

Figure 2 shows a section of this chain, which comprises a series of practically contiguous rectangular blocks 51 linked together to form a sheet though which little soil will penetrate. A proportion of the blocks have mounted on them teeth 52 in the form of tungsten carbide inserts, as might be used for rotary cutting tools. For use in the present invention, these teeth are each set at angle to the length of the chain: the angles may differ from tooth to tooth, and the optimum pattern of teeth will vary to some extent with the soil type.

Another minor modification consists of the removal of a shoe 6 that extends into the trench in the unmodified machine.

A hopper 7 and blower 8 supply lime at controlled rate though a flexible pipe 9 to be discharged to the top of the bucket chain, and thus mixed with the soil by the action of the bucket chain to form a linear zone 10 of improved soil behind the machine. The hopper and blower may be fixed or if the extent of the work justifies may be mounted on a tracked or wheeled vehicle.

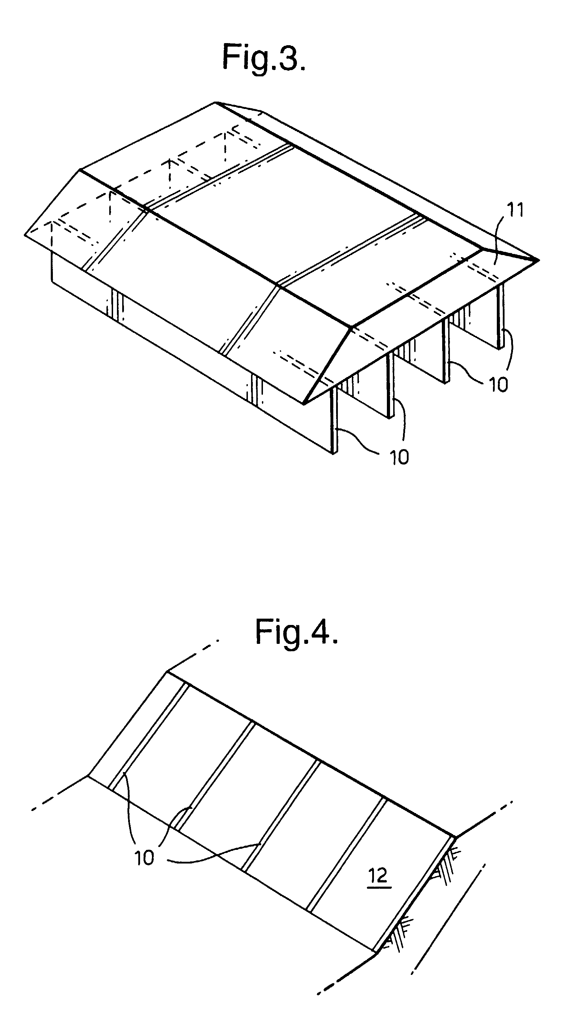

Figure 3 shows the use of four such linear zones 10, longitudinally extending and equally spaced from one another, to improve the capacity of soil prior to the formation of an embankment for a road or railway.

Figure 4 similarly shows the use of parallel improved linear zones 10 to improve a slope 11, so permitting a gradient that would be too steep if the soil were unimproved and avoiding the need to consume extra land to allow the gradient to be lessened or to build a retaining wall.

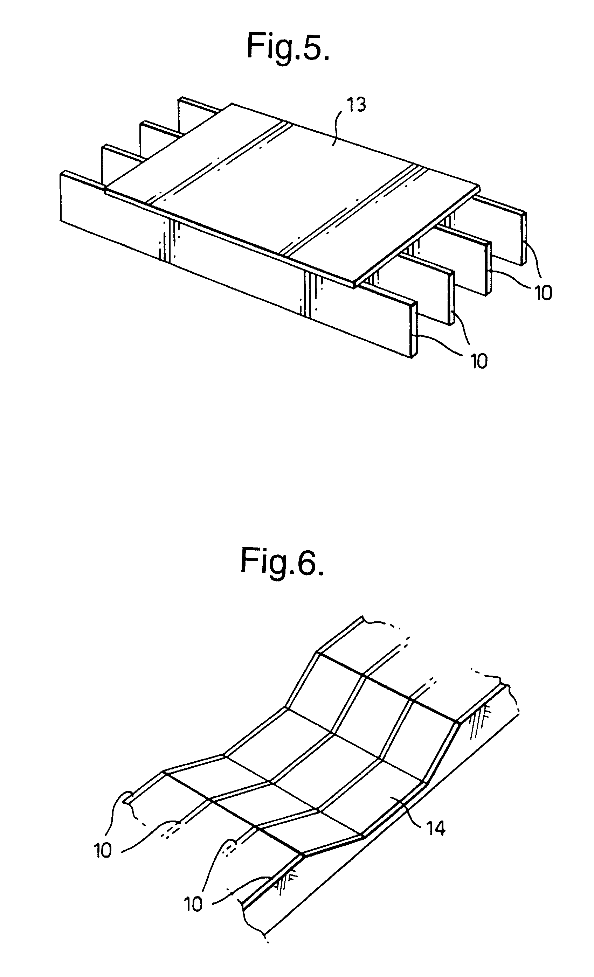

Figure 5 indicates how the invention may be used to support a raft foundation 13.

Figure 6 illustrates the use of the invention in temporary works, here a cutting 14 that might form the worksite for a cut-and-cover tunnel or accommodate a temporarily diverted section of road while work is in progress elsewhere. Depending on the depth of the excavation, linear improved zones 10 may in this case be formed before excavation begins (and part of the improved zones subsequently excavated) or after it is complete, or in some cases both before and after and perhaps at intermediate stages as excavation progresses.

## Claims

1. A process for the improvement of soil which is organic or has a substantial clay content or both of these, comprising *in situ* mixing of lime into selected linear zones of the soil.

2. A process for the improvement of soil with substantial clay content comprising *in situ* mixing of lime into selected linear zones of the soil.

3. A process as clamed in claim 1 or claim 2 in which the linear zones are of rectangular cross-section.

4. A process as claimed in any one of claims 1-3 in which the linear zones are straight.

5. A process as claimed in any one of claims 1-4 in which the linear zones are uniformly spaced apart.

6. A process as claimed in any one of claims 1-5 in which at least one other stabilising additive is added to the soil.

7. A process as claimed in claim 6 in which the other stabilising additive is selected from hydraulic cements, furnace slag and pulverised fly ash.

8. A soil improvement process as claimed in any one of claims 1-7 comprising the use of a modified trenching machine to mix the additive with the soil.

9. An improved soil structure which is organic and/or of substantial clay content comprising linear zones of the soil *in situ* mixed with lime.

10. An improved soil structure which is organic and/or of substantial clay content comprising linear zones of the soil *in situ* mixed with lime.

11. A structure as claimed in claim 9 or claim 10 in which the linear zones are straight.

12. A structure as claimed in any one of claims 9-11 in which the linear zones are uniformly spaced apart.

13. A structure as claimed in any one of claims 9-12 in which at least one other stabilising additive is mixed with the soil.

14. A structure as claimed in claim 13 in which the other stabilising additive is selected from hydraulic cements, furnace slag and pulverised fly ash.
